# EUROPEAN PATENT SPECIFICATION

(11) **EP 1 419 049 B1**
(45) Date of publication and mention of the grant of the patent: **15.12.2004**
(21) Application number: 02767732.7
(22) Date of filing: 09.08.2002
(51) Int. Cl.: B32B 17/06, E04F 13/14, B32B 31/00, B32B 17/10

(54) **METHOD OF MANUFACTURING A COMPOSITE STONE-GLASS PANEL, AND PANEL OBTAINED BY SUCH METHOD**
VERFAHREN ZUR HERSTELLUNG EINER STEIN-GLASVERBUNDPLATTE, SOWIE MITTELS DIESES VERFAHRENS ERHALTENE PLATTE
PROCEDE DE FABRICATION D'UN PANNEAU PIERRE-VERRE COMPOSITE ET PANNEAU OBTENU AU MOYEN DUDIT PROCEDE

(30) Priority: 22.08.2001 IT TO20010082
(43) Date of publication of application: 19.05.2004
(73) Proprietor: Taltos S.R.L., 10060 Inverso Pinasca (Torino) (IT)
(72) Inventor: BRENMAN, David, Wayne, I-13011 Borgo Sesia (IT)
(74) Representative: Robba, Pierpaolo
(86) International application number: PCT/IB2002/003217
(87) International publication number: WO 2003/018310

(56) References cited:
- DE-A- 19 613 439
- US-A- 4 312 823
- US-A- 4 724 023
- US-A1- 2002 062 921

## Description

The present invention relates to a method of manufacturing a composite stone-glass panel and to a panel obtained by such method.

More particularly, the invention concerns a method allowing coupling a single-layer or multi-layer glass sheet with a slab of natural stone, such as marble, granite or travertine.

Composite stone-glass panels are mainly employed to form external facings, thanks to their high resistance to atmospheric agents, or in general to manufacture highly resistant ornamental facings.

Document EP 0 122 357 discloses a method of producing a known composite panel. According to the teachings of said document, a slab of natural stone is coupled with a glass sheet through the interposition of a sheet of thermoplastic material. The sheet of thermoplastic material adheres to the walls of the sheet and the slab thanks to a gluing process including applying a certain pressure to the panel while simultaneously heating same to such a temperature that the thermoplastic material melts.

Panels manufactured by such a method have sometimes some drawbacks: actually, it may happen that, due to the poor adhesion of the sheet of thermoplastic material to the stone slab, the glass sheet becomes detached from the stone, even only in part, thereby causing potential danger situations and/or altering the panel aesthetic appearance.

It is an object of the invention to provide a method of producing a particularly safe and resistant panel having high quality and reduced cost.

It is another object to provide a method of producing a composite panel, which method allows firmly securing the glass sheet to the stone slab and, at the same time, reclaiming the latter from cracks, grooves or defects, if any, even of important size.

The above and other objects are achieved by a method of producing a composite panel in accordance with the present invention, as claimed in the appended claims.

The method of the invention can advantageously be used for producing panels comprising a stone slab, e. g. of marble, granite or travertine, and a glass sheet of any kind, for instance a single-layer or multi-layer, colourless or coloured sheet.

The above and other objects of the invention will become more apparent from the description of a preferred embodiment, with reference to the accompanying drawings, in which:
- Figs. 1 to 6 are side views of six different steps of a method of producing a composite panel in accordance with the present invention;
- Fig. 7 is a diagrammatic partial cross-sectional view, in enlarged scale, of a first embodiment of a composite panel produced in accordance with the present invention; and
- Fig. 8 is a diagrammatic partial cross-sectional view, in enlarged scale, of a second embodiment of a composite panel produced in accordance with the present invention.

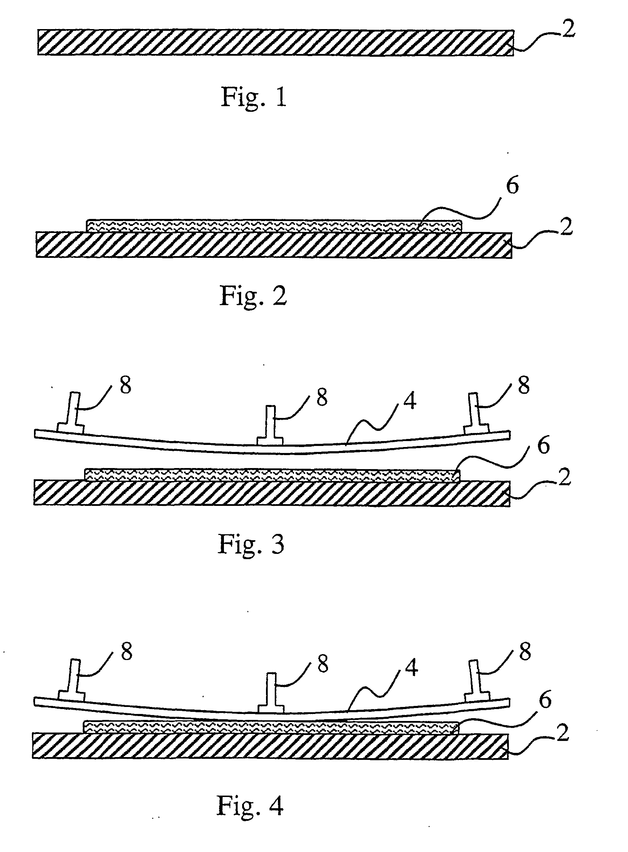

Referring to Fig. 1, a slab of stony material 2, for instance marble, granite, travertine or another natural stone, is horizontally arranged for preparing a composite panel.

In case the upper surface of slab 2 is not "rough" enough, in order to ensure a good grip of resin 6 that will be subsequently spread over the slab, slab 2 is submitted to a working process including either a step of mechanical abrasion ("pre-sizing") or, in the alternative, a step of chemical attack. Both workings are known in the field of stone processing.

Subsequently, still in order to improve the resin grip, it is advisable that the slab is submitted to a thermal treatment capable of eliminating, to the greatest possible extent, the humidity present in the slab. Such a treatment is performed for instance by keeping slab 2 at a temperature of 50°C for a period of 4 hours.

A layer of thermosetting resin 6 in fluid condition is then spread on slab 2, by using a manual system or, preferably, an automatic one. Generally, it will be sufficient to cover a central area of slab 2 with resin 6, as shown in Fig. 2, since the subsequent working steps will result in a uniform distribution of the resin over the whole slab.

It is important that thermosetting resin 6 used in this working step is highly fluid and, above all, that it is free from air bubbles. To this aim the resin, usually a two-component resin, is prepared by means of a mixing and de-aerating cycle performed under high vacuum conditions. Thermosetting resin 6 being used can be for instance an epoxy resin, a polyester resin of a phenolic resin.

Subsequently, as shown in Fig. 3, a glass sheet 4 is placed above slab 2 of stony material coated with resin 6, while forcing the surface of glass sheet 4 facing slab 2 of stony material to take a convex shape. Indeed, glass sheet 4 is taken by an automatic manipulator, equipped with suckers 8, and made slightly convex. Such convexity has been exaggerated in Fig. 3 to highlight the sheet deformation.

Fig. 4 shows that convex sheet 4 is brought close to slab 2 of stony material, whereby the central region of the convex surface of glass sheet 4 is brought in contact with resin 6.

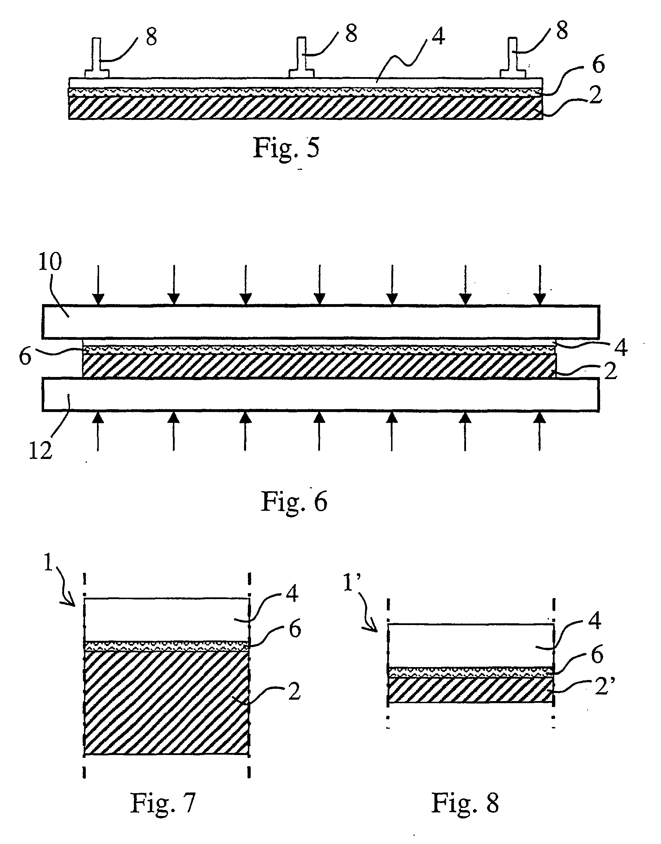

The convexity of glass sheet 4 is then gradually decreased, until becoming null, as shown in Fig. 5, so that glass sheet 4 is made to adhere to slab 2 of stony material and at the same time resin 6 is uniformly distributed over the whole of the contact surface between the sheet and the slab. Resin 6, besides becoming perfectly distributed over the whole surface, fills stone defects, cracks, grooves or pores, if any, and perfectly adheres to the glass sheet.

To further improve the resin grip on the glass sheet, it is moreover possible to treat beforehand glass sheet 4 by chemical attack, so as to roughen the sheet surface that will then contact the resin.

The composite panel thus formed is then submitted to compression, as shown in Fig. 6, and said compression is kept during the whole catalysation of thermosetting resin 6.

To exert such a compression, the composite panel may be placed into a conventional mechanical or hydraulic press 10, 12 or, possibly, inside a vacuum autoclave, so as to assist in the distribution of resin 6 between the sheet and the slab.

In the alternative, the compression step can take place by placing the composite panel into a sealed sack within which vacuum is created.

Fig. 7 is a cross-sectional view in enlarged scale of a first composite panel 1 manufactured by the above process. In such embodiment, slab 2 of stony material is thicker than glass sheet 4. Stone slab 2 can be for instance strengthened, according to known technologies, by a layer of glass reinforced plastics applied to the panel surface not exposed to view. In the latter case, the thickness of stone slab 2 can even be less than 10 mm.

Fig. 8 shows instead a second embodiment of a composite panel manufactured by the above process. Panel 1' shown here has been obtained by coupling a front glass sheet 4 and a very thin stone slab, for instance 2 to 5 mm thick, so as to allow light to pass and to make the panel translucent.

As to glass sheets 4, glasses of any kind can be indifferently used, for instance single-layer or multi-layer glasses, colourless glasses or, for aesthetic reasons, coloured glasses.

## Claims

1. A method of manufacturing a composite panel (1, 1') including a slab of stony material (2) and a glass sheet (4) coupled to each other, the method comprising the steps of:
- providing a slab of stony material (2);
- covering at least a central area of the upper surface of said slab of stony material (2) with a layer of thermosetting resin (6) in fluid condition;
- providing a glass sheet (4) above said slab of stony material (2), while forcing the surface of said glass sheet (4) facing said slab of stony material (2) to take a convex shape;
- bringing said glass sheet (4) close to the slab of stony material (2), thereby bringing a central sheet area in contact with the resin (6) present on a corresponding central area of the slab of stony material (2);
- gradually decreasing the convexity of the glass sheet (4), until such convexity becomes null, whereby the glass sheet (4) is made to adhere to the slab of stony material (2) and said resin (6) is uniformly distributed between the slab (2) and the sheet (4);
- uniformly compressing said slab of stony material (2) against said glass sheet (4) during catalysation of the thermosetting resin (6).

2. A method as claimed in claim 1, wherein said step of providing a slab of stony material (2) includes a working process capable of roughening the slab surface to be coupled with said glass sheet (4).

3. A method as claimed in claim 2, wherein the surface of said slab of stony material (2) is roughened by a process of mechanical pre-sizing.

4. A method as claimed in claim 2, wherein the surface of said slab of stony material (2) is roughened by chemical attack.

5. A method as claimed in claim 1, wherein, before covering at least a central area of the upper surface of said slab of stony material (2) with a layer of thermosetting resin (6), said slab of stony material (2) is submitted to a heating step.

6. A method as claimed in claim 1, wherein said glass sheet (4) is previously processed by chemical attack to roughen the sheet surface to be coupled with said slab of stony material (2).

7. A method as claimed in claim 1, wherein said step of compressing said slab of stony material (2) against said glass sheet (4) is performed by placing said composite panel (1, 1') into a press.

8. A method as claimed in claim 1, wherein said step of compressing said slab of stony material (2) against said glass sheet (4) is performed inside an autoclave within which vacuum is created.

9. A method as claimed in claim 1, wherein said step of compressing said slab of stony material (2) against said glass sheet (4) is performed by placing said composite panel (1, 1') into a sealed sack within which vacuum is created.

10. A method as claimed in claim 1, wherein said thermosetting resin (6) is an epoxy resin.

11. A method as claimed in claim 1, wherein said thermosetting resin (6) is a polyester resin.

12. A method as claimed in claim 1, wherein said thermosetting resin (6) is a phenolic resin.

13. A method as claimed in any preceding claim, wherein said slab of stony material (2) has a thickness in the range 2 to 5 mm, so as to allow light to pass and to make said composite panel (1, 1') translucent.

14. A composite panel (1, 1') of the type including a slab of stony material (2) coupled to a glass sheet (4), **characterised in that** said glass sheet (4) adheres to said slab of stony material (2) thanks to the interposition of a layer of thermosetting resin (6).

15. A composite panel as claimed in claim 14, wherein said thermosetting resin (6) is an epoxy resin.

16. A composite panel as claimed in claim 14, wherein said thermosetting resin (6) is a polyester resin.

17. A composite panel as claimed in claim 14, wherein said thermosetting resin (6) is a phenolic resin.

## Patentansprüche

1. Verfahren zur Herstellung einer Verbundplatte (1, 1'), die eine Platte aus Gestein (2) und eine Glasscheibe (4), die aneinandergefügt sind, beinhaltet und folgende Verfahrensschritte aufweist:
Bereitstellung einer Gesteinsplatte (2);
Beschichtung mindestens eines zentralen Bereichs der Oberfläche jener Platte aus Gestein (2) mit einer Schicht aus wärmeaushärtendem Reaktionsharz (6) in flüssigem Zustand;
Bereitstellung einer Glasscheibe (4) oberhalb jener Gesteinsplatte (2),
wobei die Oberfläche jener der Gesteinsplatte (2) gegenüberliegenden Glasscheibe (4) in eine konvexe Form gezwungen wird;
Verbringung jener Glasscheibe (4) in die Nähe der Gesteinsplatte (2),
wobei dabei ein zentraler Bereich der Scheibe in Kontakt mit dem auf einem entsprechenden zentralen Bereich der Gesteinsplatte (2) vorhandenen Harz (6) gebracht wird;
graduelles Absenken der konvexen Form der Glasscheibe (4) bis die Wölbung zu Null wird, wobei die Glasscheibe (4) zur Adhäsion mit der Gesteinsplatte (2) gebracht wird und jenes Harz (6) gleichmäßig zwischen der Platte (2) und der Scheibe (4) verteilt wird;
gleichmäßiges Verpressen jener Gesteinsplatte (2) mit der Glasscheibe (4) während der Aushärtung des wärmeaushärtenden Harzes (6).

2. Verfahren nach Anspruch 1,
wobei der Verfahrensschritt der Bereitstellung einer Gesteinsplatte (2) eine zur Aufrauhung der mit der Glasscheibe (4) zu verbindenden Plattenoberfläche geeignete Bearbeitungsoperation einschließt.

3. Verfahren nach Anspruch 2,
wobei die Oberfläche jener Gesteinsplatte (2) durch ein mechanisches Vorbearbeitungsverfahren aufgerauht wird.

4. Verfahren nach Anspruch 2,
wobei die Oberfläche jener Gesteinsplatte (2) durch chemische Einwirkung aufgerauht wird.

5. Verfahren nach Anspruch 1,
wobei vor der Beschichtung mindestens eines zentralen Bereichs der Oberfläche der Gesteinsplatte (2) mit einer Schicht wärmeaushärtenden Reaktionsharzes (6) jene Gesteinsplatte (2) einer Aufheizphase ausgesetzt wird.

6. Verfahren nach Anspruch 1,
wobei jene Glasscheibe (4) vorab durch chemische Einwirkung behandelt wird, um die mit der Gesteinsplatte (2) zu verbindende Scheibenoberfläche aufzurauhen.

7. Verfahren nach Anspruch 1,
wobei jener Verfahrensschritt der Verpressung jener Gesteinsplatte (2) mit der Glasscheibe (4) durch Plazieren der Verbundplatte (1, 1') in eine Presse durchgeführt wird.

8. Verfahren nach Anspruch 1,
wobei jener Verfahrensschritt der Verpressung jener Gesteinsplatte (2) mit der Glasscheibe (4) innerhalb eines Autoklavs in dem Vakuum erzeugt wird, ausgeführt wird.

9. Verfahren nach Anspruch 1,
wobei jener Verfahrensschritt der Verpressung jener Gesteinsplatte (2) mit der Glasscheibe (4) durch Plazieren jener Verbundplatte (1, 1') in einen abgedichteten Beutel, in dem Vakuum erzeugt wird, ausgeführt wird.

10. Verfahren nach Anspruch 1,
wobei jenes wärmeaushärtende Reaktionsharz (6) ein Epoxidharz ist.

11. Verfahren nach Anspruch 1,
wobei jenes wärmeaushärtende Reaktionsharz (6) ein Polyesterharz ist.

12. Verfahren nach Anspruch 1,
wobei jenes wärmeaushärtende Reaktionsharz (6) ein Phenolharz ist.

13. Verfahren nach einem der vorhergehenden Ansprüche,
wobei jene Gesteinsplatte (2) eine Dicke im Bereich von 2 bis 5 mm aufweist, um so Licht durchscheinen zu lassen und jene Verbundplatte (1, 1') lichtdurchlässig zu machen.

14. Verbundplatte (1, 1') vom Typ einer mit einer Glasscheibe (4) verbundenen Gesteinsplatte (2),
**dadurch gekennzeichnet, daß** jene Glasscheibe (4) an der Gesteinsplatte (2) auf Grund der Einfügung einer Schicht wärmeaushärtenden Harzes (6) haftet.

15. Verbundplatte nach Anspruch 14,
**dadurch gekennzeichnet**, bei der jenes wärmeaushärtende Reaktionsharz (6) ein Epoxidharz ist.

16. Verbundplatte nach Anspruch 14,
**dadurch gekennzeichnet**, bei der jenes wärmeaushärtende Reaktionsharz (6) ein Polyesterharz ist.

17. Verbundplatte nach Anspruch 14,
**dadurch gekennzeichnet**, bei der jenes wärmeaushärtende Reaktionsharz (6) ein Phenolharz ist.

## Revendications

1. Procédé de fabrication d'un panneau composite (1, 1') comportant une tranche de matériau pierreux (2) et une plaque de verre (4) couplées l'une à l'autre, le procédé comprenant les étapes consistant à :
- fournir une tranche de matériau pierreux (2) ;
- couvrir au moins une zone centrale de la surface supérieure de ladite tranche de matériau pierreux (2) d'une couche de résine thermodurcissable (6) à l'état fluide ;
- fournir une plaque de verre (4) au-dessus de ladite tranche de matériau pierreux (2), tout en forçant la surface de ladite plaque de verre (4) faisant face à ladite tranche de matériau pierreux (2) à prendre une forme convexe ;
- amener ladite plaque de verre (4) à proximité de la tranche de matériau pierreux (2), mettant de ce fait une zone centrale de plaque en contact avec la résine (6) présente sur une zone centrale correspondante de la tranche de matériau pierreux (2) ;
- diminuer progressivement la convexité de la plaque de verre (4) jusqu'à ce que cette convexité devienne nulle, de sorte que la plaque de verre (4) est formée pour adhérer à la tranche de matériau pierreux (2) et que ladite résine (6) est répartie uniformément entre la tranche (2) et la plaque (4) ;
- compresser uniformément ladite tranche de matériau pierreux (2) contre ladite plaque de verre (4) pendant la catalyse de la résine thermodurcissable (6).

2. Procédé selon la revendication 1, dans lequel ladite étape consistant à fournir une tranche de matériau pierreux (2) inclut un processus d'usinage capable de rendre rugueuse la surface de la tranche à coupler avec ladite plaque de verre (4).

3. Procédé selon la revendication 2 dans lequel la surface de ladite tranche de matériau pierreux (2) est rendue rugueuse par un processus de pré-découpage mécanique.

4. Procédé selon la revendication 2 dans lequel la surface de ladite tranche de matériau pierreux (2) est rendue rugueuse par attaque chimique.

5. Procédé selon la revendication 1, dans lequel, avant de recouvrir au moins une zone centrale de la surface supérieure de ladite tranche de matériau pierreux (2) avec une couche de résine thermodurcissable (6), ladite tranche de matériau pierreux (2) est soumise à une étape de chauffage.

6. Procédé selon la revendication 1 dans lequel ladite plaque de verre (4) est traitée préalablement par attaque chimique pour rendre irrégulière la surface de la plaque à coupler avec ladite tranche de matériau pierreux (2).

7. Procédé selon la revendication 1 dans lequel ladite étape consistant à compresser ladite tranche de matériau pierreux (2) contre ladite plaque de verre (4) est réalisée en plaçant ledit panneau composite (1, 1') dans une presse.

8. Procédé selon la revendication 1 dans lequel ladite étape consistant à compresser ladite tranche de matériau pierreux (2) contre ladite plaque de verre (4) est exécutée à l'intérieur d'un autoclave dans lequel le vide est créé.

9. Procédé selon la revendication 1 dans lequel ladite étape consistant à comprimer ladite tranche de matériau pierreux (2) contre ladite plaque de verre (4) est exécutée en plaçant ledit panneau composite (1, 1') dans un sac étanche à l'intérieur duquel le vide est créé.

10. Procédé selon la revendication 1 dans lequel ladite résine thermodurcissable (6) est une résine époxy.

11. Procédé selon la revendication 1 dans lequel ladite résine thermodurcissable est une résine de polyester.

12. Procédé selon la revendication 1, dans lequel ladite résine thermodurcissable (6) est une résine phénolique.

13. Procédé selon l'une quelconque des revendications précédentes dans lequel ladite tranche de matériau pierreux (2) présente une épaisseur se situant dans la plage de 2 à 5 mm, de façon à permettre à la lumière de passer et de rendre ledit panneau composite (1, 1') translucide.

14. Panneau composite (1, 1') du type comportant une tranche de matériau pierreux (2) couplée à une plaque de verre (4), **caractérisé en ce que** ladite plaque de verre (4) adhère à ladite tranche de matériau pierreux (2) grâce à l'interposition d'une couche de résine thermodurcissable (6).

15. Panneau composite selon la revendication 14 dans lequel ladite résine thermodurcissable (6) est une résine époxy.

16. Panneau composite selon la revendication 14 dans lequel ladite résine thermodurcissable (6) est une résine de polyester.

17. Panneau composite selon la revendication 14 dans lequel ladite résine thermodurcissable (6) est une résine phénolique.
